Europäisches Patentamt

European Patent Office

Office européen des brevets

(19)

(11) **EP 0 698 959 B1**

(12) **EUROPÄISCHE PATENTSCHRIFT**

(45) Veröffentlichungstag und Bekanntmachung des Hinweises auf die Patenterteilung:
**02.02.2000 Patentblatt 2000/05**

(51) Int Cl.$^7$: **H02M 3/335**

(21) Anmeldenummer: **95112319.9**

(22) Anmeldetag: **04.08.1995**

(54) **Sperrwandlerschaltung**

Flyback converter circuit

Circuit de convertisseur à récupération

(84) Benannte Vertragsstaaten:
**BE CH DE DK FR GB IE IT LI SE**

(30) Priorität: **22.08.1994 AT 162394**

(43) Veröffentlichungstag der Anmeldung:
**28.02.1996 Patentblatt 1996/09**

(73) Patentinhaber: **Siemens Aktiengesellschaft Österreich**
**1210 Wien (AT)**

(72) Erfinder:
• **Eckl, Gerald**
**A-2123 Schleinbach (AT)**

• **Zach, Franz, Prof.**
**A-1180 Wien (AT)**

(74) Vertreter: **Epping, Wilhelm, Dr.-Ing. et al**
**Patentanwalt**
**Postfach 22 13 17**
**80503 München (DE)**

(56) Entgegenhaltungen:
**EP-A- 0 302 433**     **EP-A- 0 355 415**
**EP-A- 0 359 323**     **EP-A- 0 605 752**
**DE-A- 4 222 851**     **US-A- 4 122 514**
**US-A- 4 849 868**

**Beschreibung**

Die Erfindung betrifft eine Sperrwandlerschaltung mit einem Eingangskreis, welche die Merkmale des Oberbegriffes von Anspruch 1 aufweist.

Schaltungen dieser Art gehören dem Stand der Technik an. Ganz allgemein sind Schaltnetzteile, seien es Sperrwandler oder Flußwandler bekannt, die mehrere Ausgangsspannungen aufweisen, von welchen zwei oder auch mehr geregelt sind. Verwiesen wird z.B. auf die folgenden Dokumente: AT-B-397 320, EP-A2-0 355 415, EP-A1-0 359 323, US-PS 4,849,868.

Ferner ist aus der EP 0 605 752 ein Schaltnetzteil bekannt, bei der eine Rechteckspannung einem zweiten Ausgangsschaltkreis zugeführt wird. Zur Erzielung einer höheren sekundären Ausgangsspannung wird die Verzugszeit des Steuersignales reduziert. Hierzu sind eine Hilfsspannungsversorgung und ein Signalgenerator, der ein speziell geformtes Synchronisationssignal erzeugt, vorhanden.

Eine Aufgabe der Erfindung liegt darin, einen Schaltnetzteil bzw. einen Gleichspannungs/ Gleichspannungswandler zu schaffen, bei dem mehrere Ausgangsspannungen in einem weiten Bereich unabhängig voneinander einstellbar sind und die Lastaufteilung in den Ausgangskreisen praktisch beliebig wählbar ist. Der Aufwand, auch hinsichtlich des Raumbedarfes soll dabei gering sein.

Die bisher bekannten Schaltungen lösen diese Aufgabe nur mangelhaft, besonders wenn man einen guten Wirkungsgrad, d.h. eine kleine Verlustleistung in dem Netzteil fordert. Beispielsweise tritt bei Fluß- oder Sperrwandlern mit linearen Längsreglern in den Ausgangskreisen eine hohe Verlustleistung auf, was sich besonders dann bemerkbar macht, wenn die Ausgangsspannungen in einem weiten Bereich einstellbar sein sollen.

Die gestellte Aufgabe wird mit einer Sperrwandlerschaltung gemäß Anspruch 1 gelöst.

Hierdurch ist ein Wandler geschaffen, bei welchem in den Ausgangskreisen die Spannungen in einem weiten Bereich völlig unabhängig voneinander eingestellt und geregelt werden können, sowie die Lastaufteilung beliebig vorgenommen werden kann. Der Bauteileaufwand ist minimal, wobei besonders hervorzuheben ist, daß außer dem Transformator keine induktiven Bauelemente (Drosseln) benötigt werden. Außerdem ist die Möglichkeit gegeben, Schaltverluste in den Ausgangskreisen durch die schaltenden Nachregler vollständig zu vermeiden.

Wenn dem gesteuerten Schalter des zweiten bzw. jedes weiteren Ausgangskreises eine Ventilstrecke inhärent ist, und er z.B. als Thyristor, Transistor, IGBT-Transistor etc. ausgebildet ist, kann je Ausgangskreis ein weiteres Bauelement eingespart werden.

Bei einer zweckmäßigen Ausführung des Eingangskreises weist dieser einen Iststrommesser für den Eingangsstrom, insbesondere einen Shunt auf, dessen Meßwert einem Regeleingang des Reglers des Eingangskreises zugeführt ist.

Um auch die Eingangsspannung in die Regelung miteinbeziehen zu können, kann einem Regeleingang des Reglers des Eingangskreises die Eingangsgleichspannung zugeführt sein.

In manchen Fällen können sich weiter verbesserte Regeleigenschaften ergeben, falls ein Ausgang des Reglers des zweiten und/oder eines weiteren Ausgangskreises einem Regeleingang bzw. Regeleingängen des Reglers des Eingangskreises zugeführt ist bzw. sind. In diesem Fall wirken die Regler des zweiten, dritten etc. Ausgangskreises nicht nur auf die gesteuerten Schalter des jeweiligen Kreises sondern beeinflussen auch Frequenz und/oder Tastverhältnisse des Ansteuerpulses im Eingangskreis.

Bei bestimmten Anforderungen an eine rasche Regeldynamik kann es von Vorteil sein, wenn die Taktfrequenz der Regler des zweiten bzw. eines weiteren Ausgangskreises ein Vielfaches der Taktfrequenz des Reglers des Eingangskreises beträgt.

In Hinblick auf eine möglichst vollständige Reduktion von Schaltverlusten kann es empfehlenswert sein, wenn die Taktfrequenz der Regler des zweiten bzw. eines weiteren Ausgangskreises kleiner als die Taktfrequenz des Reglers des Eingangskreises ist.

Im Sinne einer vollständigen Vermeidung von Schaltverlusten ist es von Vorteil, falls die Regler des zweiten bzw. jedes weiteren Ausgangskreises z.B. mit Hilfe eines Zeitfensters dazu eingerichtet sind, die gesteuerten Schalter nur im stromlosen Zustand zu schalten.

Im Sinne einer optimalen Ausnützung der Bauteile, insbesondere des Transformators ist es zweckmäßig, wenn der Regler des Ausgangskreises dazu eingerichtet ist, die Wahrscheinlichkeitsdichte der dem Eingangskreis entnommenen Energieimpulse auf konstante Ausgangsspannung zu regeln.

Von diesem Fall abgesehen wird es in vielen anderen Fällen zweckmäßig sein, wenn die Taktfrequenz der Regler des zweiten bzw. jedes weiteren Ausgangskreises auf die Taktfrequenz des Reglers des Eingangskreises synchronisiert ist

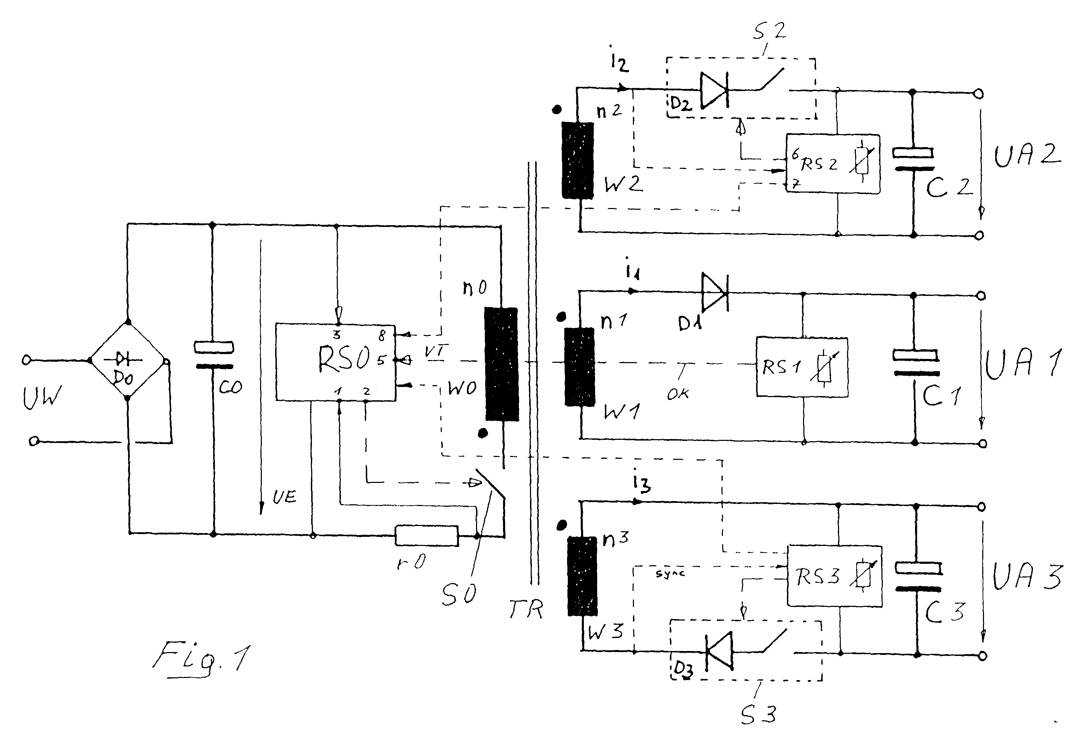

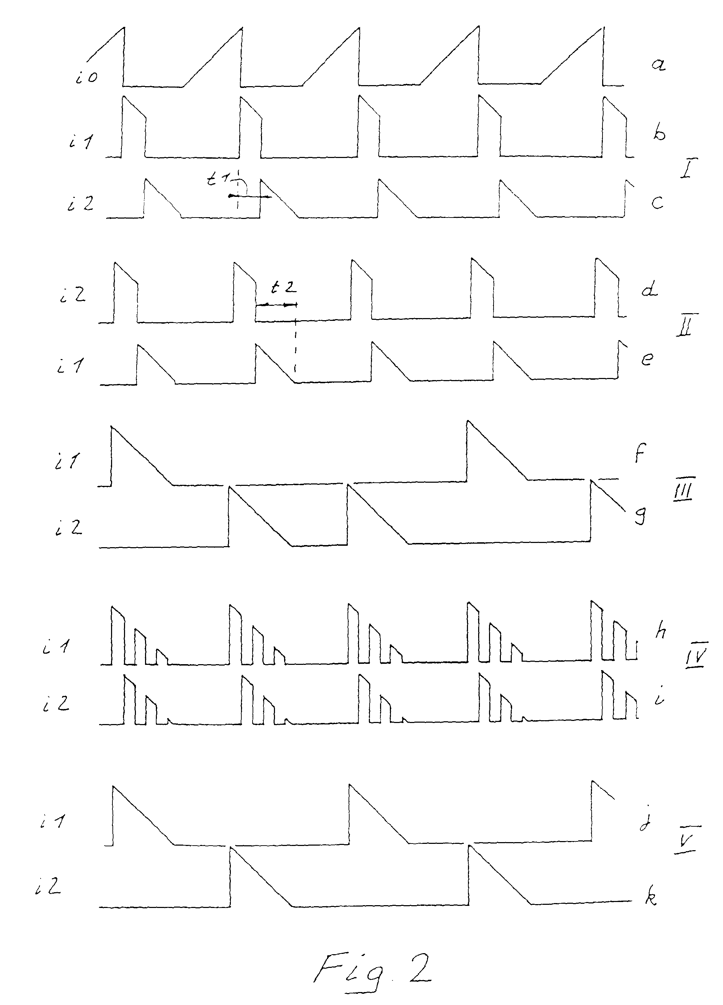

Die Erfindung samt anderer Vorteile ist im folgenden an Hand von Ausführungsbeispielen erläutert, die in der Zeichnung veranschaulicht sind. In dieser zeigen Fig. 1 ein Prinzipschaltbild einer erfindungsgemäßen Schaltung und die Fig. 2a bis k den Stromverlauf in dem Eingangskreis bzw. in dem Ausgangskreis bei verschiedenen Varianten der Erfindung.

Gemäß Fig. 1 ist eine erfindungsgemäße Sperrwandlerschaltung bei einem Schaltnetzteil verwendet, das im vorliegenden Fall drei geregelte Ausgangsspannungen UA 1, UA 2 und UA 3 liefern soll, wobei eine Netzwechselspannung UW zur Verfügung steht. Diese Spannung UW wird mittels einer Gleichrichterbrücke D 0 gleichgerichtet, sodaß an einem nachgeschalteten Kondensator C 0 eine Eingangsgleichspannung UE vorliegt, die über einen gesteuerten Schalter S 0 an die Primärwicklung W 0 eines Transformators TR mit einer Windungszahl N 0 gelegt werden kann. Für diesen Primär- oder Eingangskreis ist ein Regler RS 0 vorgesehen, der Information über den Istwert des Stromes I 0 im Eingangskreis von einem Shunt r 0 an einem Eingang 1 erhält. Von einem Ausgang 2 des Reglers RS 0 führt eine Leitung zu einem Steuereingang des gesteuerten Schalters S 0, der in bekannter Weise als Halbleiterschalter, z.B. als FET-, IGBT-oder npn -Transistor ausgebildet ist. Der Schalter S 0 arbeitet ohne Entlastungsnetzwerk, um eine möglichst vollständige Energieübergabe zu erreichen.

Einem weiteren Eingang 3 des Reglers RS 0 ist die Eingangsspannung UE zugeführt, deren tatsächlicher Wert von dem Regler berücksichtigt wird und in die Frequenz und/oder das Tastverhältnis des Reglerpulses an dem Reglerausgang 2 eingeht. Bei praktischen Ausführungsformen kann die Eingangswechselspannung UW dabei zwischen 95 und 265 V betragen, ohne daß irgendein Umschalten, z.B. von Anzapfungen der Primärwicklung W 0 erforderlich wäre. Die Taktfrequenz des Reglers R 0 liegt in der Größenordnung von 50 kHz.

An dieser Stelle sei erwähnt, daß natürlich eine Vielzahl von Sperrwandlern in der Literatur beschrieben und dem Fachmann bekannt sind, z.B. aus " Unitrode Databook z / 86 REV A, oder aus " Unitrode Product & Application Handbook 93 / 94. ".

Sekundärseitig weist die Schaltung nach der Erfindung bei diesem Ausführungsbeispiel drei Sekundärwicklungen W 1, W 2 und W 3 des Transformators TR auf, die je Windungszahlen nl, n2 und n3 besitzen.

Der erste Ausgangskreis - in Fig. 1 der mittlere - besitzt eine Gleichrichterdiode D 1 mit einem nachgeschalteten Ladekondensator C 1 sowie einen Regler R 1, dessen Ausgang 4 über eine nur strichliert angedeutete Optokopplerstrecke OK ( vgl. z.B. US-A-4, 849, 868 ) mit einem Reglereingang 5 des Reglers RS 0 des Eingangkreises verbunden ist. An dem Regler RS 1 kann, durch ein Potentiometer-Symbol angedeutet, die Ausgangsspannung UA 1 durch Änderung des Taktverhältnisses, gegebenenfalls auch der Frequenz des Reglers R 0 im Eingangskreis eingestellt werden. Bei einem praktischen Ausführungsbeispiel zwischen 3 und 6 V, wobei die Windungszahl n 1 = 2 beträgt.

Der zweite und der dritte Ausgangskreis sind untereinander gleich jedoch anders aufgebaut als der erste Ausgangskreis und beschrieben wird näher der zweite Ausgangskreis. Auf die Sekundärwicklung W 2 folgt ein gesteuerter Schalter S 2 der auch eine Gleichrichterstrecke D 2 besitzt. Letztere kann eine eigene Gleichrichterdiode sein, z.B. eine Schottky - oder pn Diode, oder sie kann dem gesteuerten Schalter S 2 inhärent sein, der dann z.B. als schneller Thyristor, IGBT -, npn - oder pnp - Transistor ausgebildet ist.

Im zweiten Ausgangskreis ist ein Regler RS 2 vorgesehen, von dessen Ausgang 6 eine Leitung zu einem Steuereingang des gesteuerten Schalters S 2 führt, der in Abhängigkeit von dem Wert der Ausgangsspannung UA 2 ein- oder ausgeschaltet wird.

Die Wicklung W 2 besitzt bei einem Ausführungsbeispiel n2=24 Windungen, die Ausgangsspannung UA 2 kann zwischen Null und 36 V eingestellt werden.

Der Regler RS 2 kann eine periodische Taktfrequenz aufweisen, die größer oder kleiner als die Taktfrequenz des Eingangsreglers RS 0 sein kann. Eine Synchronisation auf die Taktfrequenz des Eingangsreglers ist möglich und durch eine strichlierte Leitung sync angedeutet. Der Regler RS 2 kann den Schalter S 2 auch nichtperiodisch schalten. Diese verschiedenen Ausführungsformen und deren Funktionsweise werden nachstehend unter Bezugnahme auf die Fig. 2 erläutert.

Wenn der gesteuerte Schalter S 0 leitet, ergibt sich ein linearer Anstieg des Stromes 1 0, solange bis der Schalter S 0 wieder öffnet. In diesem Augenblick ist der Spitzenwert des Stromes erreicht, welcher der Wurzel der übertragenen Energie entspricht (Fig. 2a). Die Verteilung der Energie auf die Ausgangskreise erfolgt mit Hilfe der Schalter S 2 und S 3.

Der Regler R 0 des Eingangskreises kann mit fester Frequenz arbeiten, wobei der Spitzenwert des Stromes 1 0 auf konstante Ausgangsspannung UA 1 des ersten Ausgangskreises geregelt wird. Eine andere Möglichkeit besteht dann, den Spitzenwert des Stromes 1 0 konstant zu halten und Energiepakete gleicher Größe mit variabler Frequenz zu übertragen, welche wiederum auf eine konstante Ausgangsspannung UA geregelt wird. Möglich ist auch eine Kombination aus Strom- und Frequenzregelung, d.h. der Spitzenstrom im Eingangskreis und dessen Taktfrequenz werden auf konstante Ausgangsspannung UA 1 geregelt.

Bei besonderen Anforderungen an die Regeldynamik kann sich auch eine Regelung empfehlen, bei welcher bei konstanter Frequenz der übergebene Energiebetrag aus dem augenblicklichen Energiebedarf des ersten Ausgangskreises (mit der Spannung UA 1) und einem primärseitig überlagerten Stromregler gebildet wird. Hierdurch ergibt sich ein optimierbares stationäres Übertragungsverhalten und auch bei Kreuzlastsprüngen der Ausgangskreise von Null auf 100% können die Abweichungen der Ausgangsspannungen innerhalb der Grundwelligkeit (z.B. +/- 0,1%) gehalten werden. Schließlich kann auch in diesem Fall zusätzlich die Frequenz geregelt werden.

Bei einer solchen Regelung mit oder ohne Frequenzregelung ist der Regler des Eingangskreises ein Zustandsregler, der das Verhalten einer Summenstrekke nachbildet, woraus bei stationärer Belastung ein im Mittel zu übergebender Energiebetrag gebildet wird.

Der Regler des Eingangskreises kann ein Regler vom P-, I-, PI-, PID- oder PIDT 1 -Typ sein.

Wie bereits erwähnt und aus Fig. 1 ersichtlich, wird der Einfluß der Eingangsspannung UE zweckmäßigerweise bei der Bildung des Tastverhältnisses berücksichtigt, wodurch eine Vorsteuerung des Sperrwandlers im stromgeregelten Betrieb gegeben ist.

Nach Erörterung der Regelung im Eingangskreis soll nun auf die Konzeption der Ausgangskreise näher eingegangen werden.

Im ersten Ausgangskreis wird die Ausgangsspannung UA 1 über ein Potentiometer geteilt und in bekannter Weise mit einem Referenzwert verglichen. Die aus dieser Regelabweichung gebildete Stellgröße VT wird über die Optokopplerstrecke OK an den Regeleingang 5 des Reglers RS 0 im Eingangskreis übertragen. Der Regler RS 1 kann vom Typ P, I, PI, PTD oder PIDTI sein.

Im zweiten und dritten Ausgangskreis wird die über ein Potentiometer geteilte Ausgangsspannung UA 2 bzw. UA 3 gleichfalls mit einem Referenzwert verglichen und aus der Regelabweichung wird eine Stellgröße zur Ansteuerung der Schalter S 2 bzw. S 3 gebildet, was auf folgende Arten erfolgen kann.

I Synchron mit verzögertem Einschalten

II Synchron mit verfrühtem Ausschalten

III Asynchron mit Vollblockübernahme

IV Synchron oder asynchron mit n.fo

V Synchron mit fo/n

Die genannten Ausführungen bzw. Betriebsarten werden nun unter Bezugnahme auf den ersten und zweiten Ausgangskreis an Hand des Verlaufes der Ströme I 0, I 1 und 1 2 beschrieben, wobei auf die Darstellungen der Fig. 2 verwiesen wird. Der Stromverlauf in dem dritten bzw. in weiteren Ausgangskreisen entspricht jenem in dem zweiten Ausgangskreis, sodaß sich diesbezüglich eine nähere Erläuterung erübrigt.

I. Synchron mit verzögertem Einschalten

Der Schalter S 2 wird synchron zum Takt im Eingangskreis angesteuert. Das Einschalten von S 2 erfolgt innerhalb einer variablen Zeit t 1 nach dem natürlichen Zündzeitpunkt von D 2, das ist jener Zeitpunkt zu dem die Diode D 2 leitend wird, sofern S 2 geschlossen ist. Die Zeitdauer t 1 wird auf konstante Ausgangsspannung UA 2 geregelt (Fig. 2a, b, c,).

II. Synchron mit verfrühtem Ausschalten

Das Einschalten des Schalters S 2 erfolgt ( kurz vor oder spätestens zu dem oben genannten Zündzeitpunkt der Diode D 2. Ausgeschaltet wird S 2 nach einer variablen Zeit t 2 vor dem natürlichen Löschzeitpunkt der Diode D 2, das ist jener Zeitpunkt, an dem D 2 zu sperren beginnt, falls S 2 leitend ist. Die Zeitdauer t 2 wird auf konstante Ausgangsspannung UA 2 geregelt (Fig. 2a, d, e).

III. Asynchron mit Vollblockübernahme

Der Schalter S 2 wird jeweils in den stromlosen Pausen, somit vor dem Zündzeitpunkt und nach dem Löschzeitpunkt der Diode D 2- bzw. der dem Schalter S 2 inhärenten Diode - ein- bzw.- ausgeschaltet. Hierdurch werden jegliche zusätzliche Schaltverluste durch die Nachregelung vermieden.

Die Übernahme der durch den Regler RS 0 des Eingangskreises quantisierten "Energiepakete bzw. -impulse" in den jeweiligen Ausgangskreis erfolgt stochastisch, wobei die Wahrscheinlichkeitsdichte auf konstante Ausgangsspannung VA 2 (bzw. VA 3 etc.) geregelt wird. Zu diesem Zweck wird vor oder nach einem bestimmten Zeitpunkt entschieden, ob das nächstfolgende Paket übernommen werden soll, d.h. es wird ein Zeitfenster gebildet, das im eingeschalteten Zustand des Schalters SO liegt. Soll ein Paket übernommen werden, so wird unmittelbar nach dem Einschalten von S 0, auf jeden Fall während der Stromflußphase dieses Schalters im Eingangskreis der entsprechende Schalter S 2 bzw. S 3 der Ausgangskreise geschlossen, d.h. in den leitenden Zustand gebracht. Falls kein Energiepaket übernommen werden soll, wird der entsprechende Schalter des Ausgangskreises in dieser Phase geöffnet, d.h. in seinen sperrenden Zustand gebracht. Die Stromflußphase im Eingangskreis dauert so lange, daß sämtliche Schalt- und Umschwingvorgänge der Periode beim Öffnen des Schalters S 0 bereits abgeschlossen sind (Fig. 2f, g).

IV. Synchron oder asynchron mit n.fo

Die Ansteuerung der Schalter S 2, S 3 etc. der Ausgangskreise erfolgt periodisch, wobei Frequenz und/oder Taktverhältnis auf konstante Ausgangsspannung UA 2, UA 3 etc. geregelt werden. Wie bereits erwähnt, kann die Taktfrequenz des Ausgangskreises, die ein Vielfaches der Taktfrequenz des Eingangskreises, nämlich n.fo beträgt, mit dieser Taktfrequenz fo synchronisiert werden (Fig. 2h, i).

V. Synchron mit fo/n

Die Ansteuerung der Schalter S 2, S 3 der Ausgangskreise erfolgt subharmonisch, d.h. mit dem 1/n-fachen der Taktfrequenz fo des Eingangskreises. Die Größe von n ergibt sich aus der Lastaufteilung innerhalb der Ausgangskreise (Fig. 2j, k).Auch in diesem Fall sind Schaltverluste völlig vermieden.

Bei besonders hohen Anforderungen an die Regelgüte, insbesondere auch zur Vermeidung von Kreuzmodulation bei Lastsprüngen der Ausgangskreise, können Ausgänge 7 der Regler RS 2, RS 3 etc. des zweiten und jedes weiteren Ausgangskreises z.B. über je eine weitere Optokopplerstrecke einem Regeleingang 8 des Reglers R 0 des Eingangskreises zugeführt sein, was in Fig. 1 strichliert angedeutet ist. Hierdurch erfolgt eine weitestgehende regeltechnische Entkopplung der einzelnen Ausgangskreise.

Um zu erreichen, daß die hauptsächlich im Luftspalt des Transformators TR gespeicherte Energie nur in jenen Ausgangskreis fließt, dessen Schalter S 2, S 3 gerade leitet, wird das Verhältnis der sekundären Windungszahlen n 1, n 2, n 3 etc. des Transformators TR so gewählt, daß das Verhältnis der Windungszahl n 2 bzw. n 3 der zweiten und jeder weiteren Sekundärwicklung W 2, W 3 zu der Windungszahl n 1 der ersten Sekundärwicklung W 1 im wesentlichen dem Verhältnis der maximal einstellbaren zweiten bzw. jeder weiteren Ausgangsspannung UA 2 bzw. UA 3 zu der minimal einstellbaren ersten Ausgangsspannung UA 1 entspricht. Bei dem bereits mehrfach erwähnten Dimensionierungsbeispiel gilt

| n 1 = 2 | UA1 | 3 | bis 6V |
|---------|-----|---|--------|
| n2=24   | UA2 | O | bis 36V |
| n 3= 24 | UA3 | O | bis 36V |

sodaß sich tatsächlich ergibt:

$$\frac{UA\ 2\ max}{UA\ 1\ min} = \frac{n2}{n1} \quad \text{und} \quad \frac{UA\ 3\ max}{UA\ 1\ min} = \frac{n3}{n1}$$

## Patentansprüche

1. Sperrwandlerschaltung mit einem Eingangskreis, gebildet von einer Primärwicklung (WO) eines Transformators (Tr), welche in Serie mit einem von einem Regler (RS0) durch einen Ansteuerpuls angesteuerten Schalter (S0) an eine Eingangsgleichspannung (UE) gelegt ist, und mit zumindest zwei Ausgangskreisen, gebildet von zumindest zwei Sekundärwicklungen (L1,L2,L3) des Transformators, welche je über eine Gleichrichterstrecke (D1,D2,D3), einen Regler (RS1,RS2,RS3) und einen Ladekondensator (C1,C2,C3) galvanisch gegen die Eingangsspannung getrennte einstellbare und geregelte Ausgangsgleichspannungen (UA1,UA2,UA3) liefern, wobei der Regler (RS1) eines Ausgangskreises mit dem Regler des Eingangskreises zusammenwirkt,

   in einem ersten Ausgangskreis einer ersten Sekundärwicklung (W1) ein Gleichrichter (D1) und ein Ladekondensator (C1) nachgeschaltet sind, und über den zugehörigen, die Ausgangsgleichspannung (UA1) erfassenden Regler (RS1) der Regler (RS 0) des Eingangskreises zur Änderung des Tastverhältnisses und/oder der Frequenz des Ansteuerpulses angesteuert ist, und

   der zumindest zweite Ausgangskreis einen gesteuerten Schalter (S2,S3) aufweist, der von dem Regler (RS2,RS3) des jeweiligen Ausgangskreises in Abhängigkeit von der Ausgangsspannung (UA2,UA3) getaktet ist, dadurch gekennzeichnet, daß

   die sekundärseitigen Windungszahlen (nl, n2,n3) so gewählt sind, daß das Verhältnis der Windungszahl (n2,n3) der zweiten bzw. jeder weiteren Sekundärwicklung zu der Windungszahl (nl) der ersten Sekundärwicklung im wesentlichen dem Verhältnis der maximal einstellbaren zweiten bzw. jeder weiteren Ausgangsspannung (UA2 bzw. UA3) zu der minimal einstellbaren ersten Ausgangsspannung (UA1) entspricht.

2. Schaltung nach Anspruch 1, dadurch gekennzeichnet, daß dem gesteuerten Schalter (S2,S3) des zweiten bzw. jedes weiteren Ausgangskreises, insbesondere einem Thyristor, Transistor oder IGBT-Transistor, eine Ventilstrecke (D2,D3) inhärent ist.

3. Schaltung nach Anspruch 1 oder 2, dadurch gekennzeichnet, daß der Eingangskreis einen Iststrommesser für den Eingangsstrom (1 0), insbesondere einen Shunt ( r 0), aufweist, dessen Meßwert einem Regeleingang (1) des Reglers (RS 0) des Eingangskreises zugeführt ist.

4. Schaltung nach einem der Ansprüche 1 bis 3, dadurch gekennzeichnet, daß einem Regeleingang (3) des Reglers (RS0) des Eingangskreises die Eingangsgleichspannung (UE) zugeführt ist.

5. Schaltung nach einem der Ansprüche 1 bis 4, dadurch gekennzeichnet, daß ein Ausgang des Reglers (RS2, RS3) des zweiten und/oder eines weiteren Ausgangskreises einem Regeleingang bzw. Regeleingängen des Reglers (R0) des Eingangskreises zugeführt ist bzw. sind.

6. Schaltung nach einem der Ansprüche 1 bis 5, dadurch gekennzeichnet, daß die Taktfrequenz der Regler (RS2,RS3) des zweiten bzw. eines weiteren Ausgangskreises ein Vielfaches der Taktfrequenz des Reglers (RS0) des Eingangskreises beträgt.

7. Schaltung nach einem der Ansprüche 1 bis 5, dadurch gekennzeichnet, daß die Taktfrequenz der Regler (RS2, RS3) des zweiten bzw. eines weiteren Ausgangskreises kleiner als die Taktfrequenz des Reglers (RS0) des Eingangskreises ist.

8. Schaltung nach einem der Ansprüche 1 bis 7, dadurch gekennzeichnet, daß die Regler (RS2,RS3) des zweiten bzw. jedes weiteren Ausgangskreises dazu eingerichtet sind, insbesondere mit Hilfe eines Zeitfensters, die gesteuerten Schalter (RS2, RS3) nur im stromlosen Zustand zu schalten.

9. Schaltung nach Anspruch 8, dadurch gekennzeichnet, daß der Regler (RS2 bzw. RS3) des Ausgangskreises dazu eingerichtet ist, die Wahrscheinlichkeitsdichte der dem Eingangskreis entnommenen Energieimpulse auf konstante Ausgangsspannung (UA2 bzw. UA3) zu regeln.

10. Schaltung nach einem der Ansprüche 1 bis 7, dadurch gekennzeichnet, daß die Taktfrequenz der Regler (RS2,RS3) des zweiten bzw. jedes weiteren Ausgangskreises auf die Taktfrequenz des Reglers (RS0) des Eingangskreises synchronisiert ist.

**Claims**

1. Flyback-converter circuit having an input circuit, formed by a primary winding (WO) of a transformer (Tr), which is placed in series with a switch (SO), which is triggered by a controller (RSO) by a trigger pulse, at a direct current supply voltage (UE), and having at least two output circuits, formed by at least two secondary windings (L1, L2, L3 [sic]) of the transformer which deliver by way of a respective rectifier section (D1, D2, D3), a controller (RS1, RS2, RS3) and a charging capacitor (C1, C2, C3) direct current output voltages (UA1, UA2, UA3) which can be adjusted and regulated in an electrically isolated manner with respect to the input voltage, wherein the controller (RS1) of an output circuit cooperates with the controller of the input circuit,

> in a first output circuit, a rectifier (D1) and a charging capacitor (C1) are connected downstream of a first secondary winding (W1), and by way of the associated controller (RS1), which detects the direct current output voltage (UA1), the controller (RS0) of the input circuit is triggered to alter the duty factor and/or the frequency of the trigger pulse, and
> the at least one second output circuit has a controlled switch (S2, S3), which is clocked by the controller (RS2, RS3) of the respective output circuit as a function of the output voltage (UA2, UA3),

characterised in that
the secondary number of turns (n1, n2, n3) is chosen in such a way that the ratio of the number of turns (n2, n3) of the second and each further secondary winding, respectively, to the number of turns (nl) of the first secondary winding corresponds substantially to the ratio of the maximum adjustable second output voltage and each further output voltage (UA2 and UA3) respectively to the minimum adjustable first output voltage (UA1).

2. Circuit according to claim 1, characterised in that a valve section (D2, D3) is inherent in the controlled switch (S2, S3), in particular a thyristor, transistor or IGBT transistor, of the second output circuit and each further output circuit, respectively.

3. Circuit according to claim 1 or 2, characterised in that the input circuit has an actual-current meter for the input current (1 0), in particular a shunt (r 0), the measured value of which is supplied to a control input (1) of the controller (RSO) of the input circuit.

4. Circuit according to one of claims 1 to 3, characterised in that the direct current supply voltage (UE) is supplied to a control input (3) of the controller (RSO) of the input circuit.

5. Circuit according to one of claims 1 to 4, characterised in that an output of the controller (RS2, RS3) of the second output circuit and/or of a further output circuit is/are supplied to a control input/ control inputs of the controller (RO [sic]) of the input circuit.

6. Circuit according to one of claims 1 to 5, characterised in that the clock frequency of the controllers (RS2, RS3) of the second output circuit and of a further output circuit, respectively, amounts to a multiple of the clock frequency of the controller (RSO) of the input circuit.

7. Circuit according to one of claims 1 to 5, characterised in that the clock frequency of the controllers (RS2, RS3) of the second output circuit and of a further output circuit, respectively, is less than the clock frequency of the controller (RSO) of the input circuit.

8. Circuit according to one of claims 1 to 7, characterised in that the controllers (RS2, RS3) of the second output circuit and of each further output circuit, respectively, are set up, in particular with the aid of a time window, to switch the controlled switches (RS2, RS3 [sic]) only in the off-circuit state.

9. Circuit according to claim 8, characterised in that the controller (RS2 and RS3 respectively) of the output circuit is set up to regulate the probability density of the energy pulses taken from the input circuit to a constant output voltage (UA2 and UA3 respectively).

10. Circuit according to one of claims 1 to 7, characterised in that the clock frequency of the controllers (RS2, RS3) of the second output circuit and of each further output circuit, respectively is synchronised to the clock frequency of the controller (RSO) of the input circuit.

## Revendications

**1.** Circuit de convertisseur à récupération, comportant un circuit d'entrée formé par un enroulement (WO) primaire d'un transformateur (TR) qui, en série avec un interrupteur (SO) commandé par un régulateur (RSO) par une impulsion de commande, est mis à une tension (UE) continue d'entrée, et comportant au moins deux circuits de sortie formés par au moins deux enroulements (L1, L2, L3) secondaires du transformateur qui fournissent, chacun par l'intermédiaire d'une section (D1, D2, D3) de redresseur, d'un régulateur (RS1, RS2, RS3) et d'un condensateur (C1, C2, C3) de charge, des tensions (UA1, UA2, UA3) continues de sortie régulées, réglables et séparées de manière galvanique de la tension d'entrée, le régulateur (RS1) d'un circuit de sortie coopérant avec le régulateur du circuit d'entrée,

un redresseur (D1) et un condensateur (C1) de charge étant montés en aval dans un premier circuit de sortie d'un premier enroulement (W1) secondaire, le régulateur (RSO) du circuit d'entrée étant commandé, par l'intermédiaire du régulateur (RS1) détectant la tension (UA1) continue de sortie associée, pour faire varier le rapport cyclique et/ou la fréquence de l'impulsion de commande, et
le au moins deuxième circuit de sortie comportant un interrupteur (S2, S3) commandé, qui est synchronisé par le régulateur (RS2, RS3) du circuit de sortie associé en fonction de la tension (UA2, UA3) de sortie, caractérisé en ce que
les nombres (n1, n2, n3) de spires côté secondaire sont choisis de manière que le rapport du nombre (n2, n3) de spires du deuxième enroulement secondaire ou de chaque enroulement secondaire supplémentaire au nombre (n1) de spires du premier enroulement secondaire corresponde sensiblement au rapport de la deuxième tension (UA2) de sortie ou de chaque tension (UA3) de sortie supplémentaire, pouvant être réglée au maximum, à la première tension (UA1) de sortie, pouvant être réglée au minimum.

**2.** Circuit suivant la revendication 1, caractérisé en ce qu'une section (D2, D3) de valve est inhérente à l'interrupteur (S2, S3) commandé du deuxième circuit de sortie ou de chaque circuit de sortie supplémentaire, l'interrupteur étant notamment un thyristor, un transistor ou un transistor IGBT.

**3.** Circuit suivant la revendication 1 ou 2, caractérisé en ce que le circuit d'entrée comporte un dispositif de mesure de courant réel pour le courant (i0) d'entrée, notamment un shunt (r0), dont la valeur de mesure est envoyée à une entrée (1) de régulation du régulateur (RS0) du circuit d'entrée.

**4.** Circuit suivant l'une des revendications 1 à 3, caractérisé en ce que la tension (UE) continue d'entrée est envoyée à une entrée (3) de régulation du régulateur (RSO) du circuit d'entrée.

**5.** Circuit suivant l'une des revendications 1 à 4, caractérisé en ce qu'une sortie du régulateur (RS2, RS3) du deuxième circuit de sortie et/ou d'un circuit de sortie supplémentaire est envoyée ou sont envoyées à une entrée de régulation ou à des entrées de régulation du régulateur (R0) du circuit d'entrée.

**6.** Circuit suivant l'une des revendications 1 à 5, caractérisé en ce que la fréquence de cycle des régulateurs (RS2, RS3) du deuxième circuit de sortie ou d'un circuit de sortie supplémentaire est égale à un multiple de la fréquence de cycle du régulateur (RSO) du circuit d'entrée.

**7.** Circuit suivant l'une des revendications 1 à 5, caractérisé en ce que la fréquence de cycle des régulateurs (RS2, RS3) du deuxième circuit de sortie ou d'un circuit de sortie supplémentaire est inférieure à la fréquence de cycle du régulateur (RSO) du circuit d'entrée.

**8.** Circuit suivant l'une des revendications 1 à 7, caractérisé en ce que les régulateurs (RS2, RS3) du deuxième circuit de sortie ou de chaque circuit de sortie supplémentaire sont réglés, notamment à l'aide d'une fenêtre temporelle, pour ne commuter les interrupteurs (RS2, RS3) commandés qu'à l'état sans courant.

**9.** Circuit suivant la revendication 8, caractérisé en ce que le régulateur (RS2 ou RS3) du circuit de sortie est réglé pour réguler la densité de probabilité des impulsions d'énergie prélevées du circuit d'entrée à une tension (UA2 ou UA3) de sortie constante.

**10.** Circuit suivant l'une des revendications 1 à 7, caractérisé en ce que la fréquence de cycle des régulateurs (RS2, RS3) du deuxième circuit de sortie ou de chaque circuit de sortie supplémentaire est synchronisée à la fréquence de cycle du régulateur (RSO) du circuit d'entrée.

Fig. 1

Fig. 2